Europäisches Patentamt

(19) **European Patent Office**

**Office européen des brevets**

(11) Veröffentlichungsnummer: **0 108 228**
**A2**

(12) # EUROPÄISCHE PATENTANMELDUNG

(21) Anmeldenummer: **83109384.4**

(22) Anmeldetag: **21.09.83**

(51) Int. Cl.³: **H 04 M 1/68**

(30) Priorität: **08.11.82 CH 6469/82**

(43) Veröffentlichungstag der Anmeldung:
**16.05.84 Patentblatt 84/20**

(84) Benannte Vertragsstaaten:
**BE FR GB NL**

(71) Anmelder: **SODECO-SAIA AG**
**Postfach 420**
**CH-1211 Genf 16(CH)**

(72) Erfinder: **Andersen, Niels Thorup**
**Brandenburgerstrasse 25**
**D-6369 Büdesheim(DE)**

(74) Vertreter: **Pazeller, Friedrich et al,**
**LGZ LANDIS & GYR ZUG AG Konzern-Patentabteilung**
**CH-6301 Zug(CH)**

(54) **Fernsprechstelle mit niedrigem Speiseleistungsverbrauch.**

(57) In einer bekannten Schaltung einer Fernsprechstelle mit Zusatzgeräten, in welcher der Eingangskreis (11) eines Speisegerätes (10) für Zusatzgeräte elektrisch in Reihe geschaltet ist mit dem eigentlichen Hör/Sprech-Kreis (6; 7; 8; 9) ist das Kohlemikrofon ersetzt worden durch die niederohmige Sekundärwicklung (8b) eines zweiten Sprechtransformators (8), welche eine hochohmige Teilwicklung (CB) der Primärwicklung (6a) eines ersten Sprechtransformators (6) und die mit dieser elektrisch in Reihe geschalteten Leitungsnachbildung (9) gleichstrommmässig überbrückt. Dadurch wird der Speiseleistungsverbrauch des Hör/Sprech-Kreises und damit auch derjenige der Fernsprechstelle stark reduziert. Der zweite Sprechtransformator (8) dient zusätzlich dem Einkoppeln des Mikrofonsignals, welches in einem zweiten Fernhörer (14), der als Mikrofon arbeitet, erzeugt wird und über einen Trenntransformator (18) und einen Mikrofonverstärker (13) die Primärwicklung (8a) des zweiten Sprechtransformators (8) erreicht.

Fig. 1

## Fernsprechstelle mit niedrigem Speiseleistungsverbrauch

### Anwendungsgebiet und Zweck

Die Erfindung bezieht sich auf eine Fernsprechstelle mit niedrigem Speiseleistungsverbrauch gemäss dem Oberbegriff des Anspruchs 1.

Solche Fernsprechstellen werden in Fernsprecheinrichtungen benötigt, bei denen die Fernsprechämter den Teilnehmerschlaufen nun eine geringe Speiseleistung zur Verfügung stellen und bei denen ausserdem noch, zusätzlich zu den eigentlichen Fernsprechstellen, Zusatzgeräte, wie z.B. Münzautomaten, mit Speiseleistung versehen werden müssen.

### Stand der Technik

Es ist aus der CH-PS 592 989 bekannt, für solche Fernsprecheinrichtungen eine Schaltung zu verwenden, die den Eingangskreis-Leistungsverbrauch des Speisegerätes der Zusatzgeräte möglichst gering hält. Dieser Eingangskreis ist dabei mit der eigentlichen Fernsprechstelle elektrisch in Reihe geschaltet.

### Aufgabe und Lösung

Der Erfindung liegt die Aufgabe zugrunde, eine bekannte und normierte Fernsprechstellen-Schaltung so abzuändern, dass ihr Eingangs-Speiseleistungsverbrauch stark reduziert wird, so dass trotz der niedrigen der Teilnehmerschlaufe zur Verfügung stehenden Gesamtspeiseleistung für die Zusatzgeräte noch genügend Speiseleistung zur Verfügung steht, ohne dass für deren Speisegeräte noch ein zusätzlicher Aufwand vonnöten ist.

Die genannte Aufgabe wird erfindungsgemäss durch die im Kennzei-

./.

PA 2220

chen des Patentanspruchs 1 angegebenen Merkmale gelöst.

Ein Ausführungsbeispiel der Erfindung ist in der Zeichnung dargestellt und wird im folgenden näher beschrieben.

Es zeigen: Fig. 1   Ein Schaltbild einer Fernsprechstelle mit niedrigem Speiseleistungsverbrauch und

Fig. 2   ein Schaltbild eines Mikrofonverstärkers.

Gleiche Bezugszahlen bezeichnen in allen Figuren der Zeichnung gleiche Teile.

Beschreibung

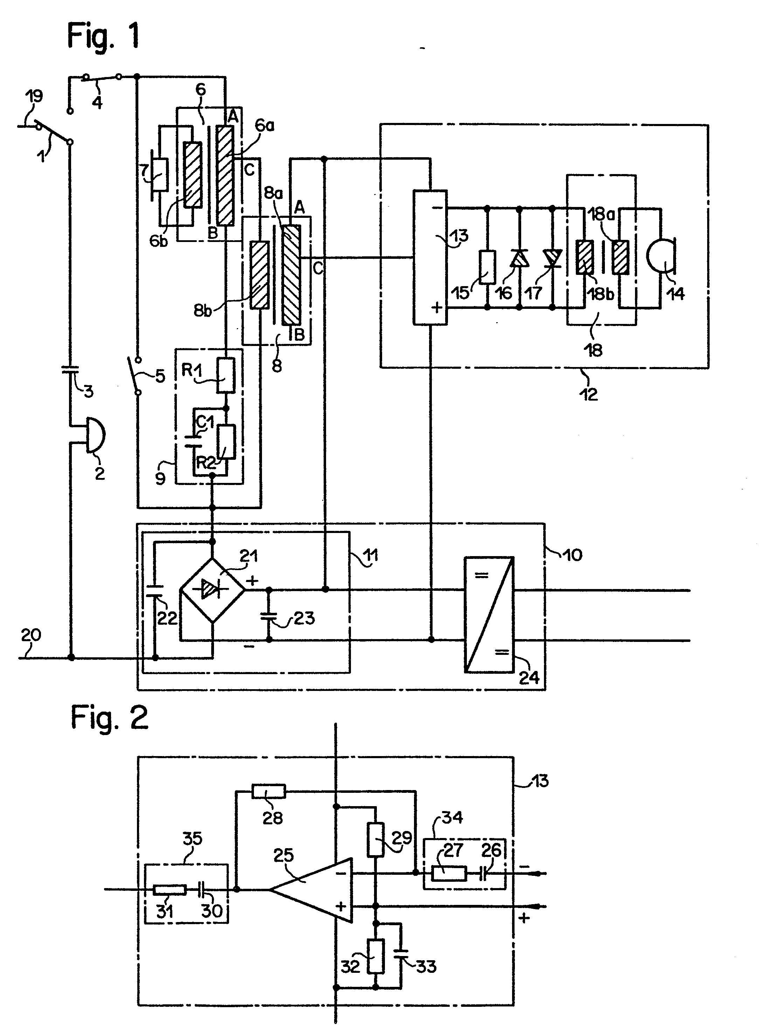

Die Fernsprechstelle gemäss der Fig. 1 besteht aus einem Gabelumschalter 1, einem Wechselstromwecker 2, einem Weckerkondensator 3, einem Nummernschalter-Impulsöffnungskontakt 4, einem Nummernschalter-Aufzugsschliesskontakt 5, einem ersten Sprechtransformator 6, einem ersten Fernhörer 7, einem zweiten Sprechtransformator 8, einer Leitungsnachbildung 9, einem Speisegerät 10 für nicht dargestellte Zusatzgeräte mit einem Eingangskreis 11 und einem Mikrofonschaltkreis 12, der seinerseits aus einem Mikrofonverstärker 13, einem zweiten Fernhörer 14, einem Lastwiderstand 15, einer ersten Diode 16, einer zweiten Diode 17 und einem Trenntransformator 18 besteht.

Die beiden Sprechtransformatoren 6 und 8 sind gleich und besitzen je eine Primärwicklung 6a bzw. 8a und eine niederohmige Sekundärwicklung 6b bzw. 8b. Letztere besitzt jeweils einen ersten Pol A, einen zweiten Pol B und eine Zwischenanzapfung C. Die Teilwicklung AC ist jeweils niederohmiger als die Teilwicklung CB. Der Trenntransformator 18 hat ein Uebersetzungsverhältnis gleich eins. Die zweipolige Leitungsnachbildung 9 besteht aus einer Reihenschaltung eines ersten Widerstandes R1 und einer Parallelschaltung bestehend ihrerseits aus einem zweiten Wider-

PA 2220                                         ./.

stand R2 und einem Kondensator C1.

Ein erster Draht 19 einer zweidrahtigen Fernsprechleitung 19; 20 ist jeweils in der angegebenen Reihenfolge über den Oeffnungskontakt des Gabelumschalters 1, den Weckerkondensator 3 und den Wechselstromwecker 2 mit dem zweiten Draht 20 der Fernsprechleitung 19; 20 sowie über den Schliesskontakt des Gabelumschalters 1 und den Nummernschalter-Impulsöffnungskontakt 4 jeweils mit dem ersten Pol der Primärwicklung 6a und dem ersten Pol des Nummernschalter-Aufzugsschliesskontaktes 5 verbunden. Der zweite Pol des letzteren liegt am ersten Pol der Leitungsnachbildung 9, der Sekundärwicklung 8b und des Einganges des Speisegerätes 10. Der zweite Pol B der Primärwicklung 6a ist auf den zweiten Pol der Leitungsnachbildung 9 und ihre Zwischenanzapfung C auf den zweiten Pol der Sekundärwicklung 8b geführt. Die Sekundärwicklung 6b speist zweipolig den ersten Fernhörer 7, der zweite Fernhörer 14 ebenfalls zweipolig die Primärwicklung 18a des Trenntransformators 18 und dessen Sekundärwicklung 18b zweipolig eine Parallelschaltung bestehend aus den beiden in umgekehrter Richtung gepolten parallelen Dioden 16 und 17 und dem Lastwiderstand 15. Der erste Pol der Sekundärwicklung 18b ist auf einen invertierenden Eingang und ihr zweiter Pol auf einen nichtinvertierenden Eingang des Mikrofonverstärkers 13 geführt, dessen einpoliger Ausgang die Zwischenanzapfung C der Primärwicklung 8a speist. Der Eingang des Speisegerätes 10 besteht aus dem Wechselspannungseingang einer aus vier Dioden bestehenden Graetzschaltung 21, zu dem ein Wechselstrom-Kurzschlusskondensator 22 parallelgeschaltet ist. Der zweite Pol dieses Einganges ist mit dem zweiten Draht 20 der Fernsprechleitung 19; 20 verbunden. Der zweipolige Gleichspannungsausgang der Graetzschaltung 21, dem der Glättungskondensator 23 parallelgeschaltet ist, speist einerseits den zweipoligen Eingang des Gleichspannungs/Gleichspannungs-Wandlers 24, dessen zweipoliger Ausgang seinerseits den zweipoligen Ausgang des Speisegerätes 10 bildet, und anderseits den zweipoligen Speiseeingang des Mikrofonverstärkers 13. Der erste Pol A der Primärwicklung 8a liegt am positiven Pol

./.

PA 2220

des Gleichspannungsausganges der Graetzschaltung 21 und ihr zweiter Pol B ist ohne Anschluss. Die Graetzschaltung 21, der Wechselstrom-Kurzschlusskondensator 22 und der Glättungskondensator 23 bilden den Eingangskreis 11.

Der Mikrofonverstärker 13 gemäss der Fig. 2 besteht aus einem Operationsverstärker 25, z.B. vom Typ 301 der Firma National Semiconductor Corporation, Santa Clara, California, einem Eingangskondensator 26, einem Vorwiderstand 27, einem Rückkopplungswiderstand 28, einem ersten Spannungsteilerwiderstand 29, einem Ausgangkondensator 30, einem Ausgangswiderstand 31, einem zweiten Spannungsteilerwiderstand 32 und einem Spannungsteilerkondensator 33. Die beiden letzteren sind parallelgeschaltet und liegen zwischen dem nichtinvertierenden Eingang des Operationsverstärkers 25, der gleichzeitig der nichtinvertierende Eingang des Mikrofonverstärkers 13 ist, und dem negativen Pol des Speisespannungseinganges des Mikrofonverstärkers 13. Der invertierende Eingang des letzteren ist über einen ersten RC-Schaltkreis 34 bestehend aus dem Eingangskondensator 26 und dem Vorwiderstand 27 mit dem invertierenden Eingang des Operationsverstärkers 25 und mit dem ersten Pol des Rückkopplungswiderstandes 28 verbunden, dessen zweiter Pol auf den Ausgang des Operationsverstärkers 25 geführt ist, der über einen zweiten RC-Schaltkreis 35 bestehend aus dem Ausgangskondensator 30 und dem Ausgangswiderstand 31 mit dem Ausgang des Mikrofonverstärkers 13 verbunden ist. Der erste Spannungsteilerwiderstand 29 liegt zwischen dem nichtinvertierenden Eingang des Operationsverstärkers 25 und dem positiven Pol des Speisespannungseinganges des Mikrofonverstärkers 13. Der zweipolige Speisespannungseingang des letzteren ist gleichzeitig der zweipolige Speisespannungseingang des Operationsverstärkers 25.

Die Schaltung gemäss der Fig. 1 entspricht der bekannten Schaltung einer Fernsprechstelle, in welcher das Kohlemikrofon, dessen Impedanz annähernd 230 Ω beträgt, durch die niederohmige Sekundärwicklung 8b des zweiten Sprechtransformators 8 ersetzt

./.

wurde und in welcher zusätzlich der Eingangskreis 11 des Speisegerätes 10 elektrisch in Reihe geschaltet wurde zum Hör/Sprech-
Kreis 6; 7; 8; 9 der Fernsprechstelle.

Die Arbeitsweise der nicht abgeänderen ursprünglichen Schaltung ist bekannt und wird daher nachfolgend nur kurz beschrieben. Erfolgt ein Anruf der Fernsprechstelle von aussen, so erreicht das Rufsignal über die Fernsprechleitung 19; 20 den Oeffnungskontakt des Gabelumschalters 1 und den Weckerkondensator 3 den Wechselstromwecker 2, wobei der Weckerkondensator 3 den Speisegleichstrom der Fernsprechleitung 19; 20 vom Wechselstromwecker 2 fernhält. Wird der Fernsprecherhörer abgehoben, so schaltet der Gabelumschalter 1 den ersten Draht 19 der Fernsprechleitung 19; 20 vom Wechselstromwecker 2 auf den Hör/Sprech-Kreis der Fernsprechstelle um. Ab diesem Augenblick fliesst der empfangene elektrische Gesprächsstrom vom ersten Draht 19 über den Schliesskontakt des Gabelumschalters 1, den Nummernschalter-Impulsöffnungskontakt 4, die Primärwicklung 6a, die Leitungsnachbildung 9 und den Wechselstrom-Kurzschlusskondensator 22, welcher die Graetzschaltung 21 wechselstrommässig überbrückt, zum zweiten Draht 20 der Fernsprechleitung 19; 20, und das Sprachsignal erreicht über den ersten Sprechtransformator 6 den ersten Fernhörer 7. Der durch die Fernsprechstelle gesendete elektrische Gesprächsstrom fliesst über den Sprechsendekreis, bestehend aus dem Schliesskontakt des Gabelumschalters 1, der niederohmigen Teilwicklung AC der Primärwicklung 6a und dem Wechselstrom-Kurzschlusskondensator 22, vom Mikrofon zu der Fernsprechleitung 19; 20. In der dargestellten abgeänderten Schaltung arbeitet der zweite Fernhörer 14, der gleich dem ersten Fernhörer 7 ist, als Mikrofon und sein Signal erreicht über den Trenntransformator 18, den Mikrofonverstärker 13 und den zweiten Sprechtransformator 8 den beschriebenen Sprechsendekreis der nicht abgeänderten ursprünglichen Schaltung. Die Verwendung eines Fernhörers als Mikrofon hat den Vorteil, dass Mikrofon und Fernhörer gleich sind, jedoch den Nachteil, dass die zur Verfügung stehende Energie gering ist, so dass ein Mikrofonverstärker 13 benötigt wird. Die beiden Dioden 16 und 17 sind Schutzdioden gegen überhöhte Spannungen am

- 6 -

0108228

Ausgang des Trenntransformators 18, der als konstante Last den Lastwiderstand 15 besitzt. Der Eingangskondensator 26 im Mikrofonverstärker 13 (Siehe Fig. 2) verhindert das Erscheinen einer Gleichspannung am invertierenden Eingang des Operationsverstärkers 25 von dessen nichtinvertierenden Eingang her. Der Ausgangswiderstand 31, dessen Wert z.B. annähernd gleich 150 $\Omega$ ist, dient der Impedanzanpassung, und der Ausgangskondensator 30 trennt gleichspannungsmässig den Ausgang des Operationsverstärkers 25 von der Primärwicklung 8a.

Der zweite Spechtransformator 8 hat die doppelte Aufgabe, einerseits galvanisch getrennt das Mikrofonsignal in den eigentlichen Hör/Sprech-Kreis 6; 7; 8; 9 der Fernsprechstelle einzukoppeln und anderseits die hochohmige Teilwicklung CB der Primärwicklung 6a und die Leitungsanpassung 9 gleichstrommässig mit einem möglichst niedrigen Widerstand zu überbrücken.

Der von der Fernsprechleitung 19; 20 gelieferte Speisegleichstrom der Fernsprechstelle, z.B. 22 mA, fliesst über den Schliesskontakt des Gabelumschalters 1, den Nummernschalter-Impulsöffnungskon- takt 4, die niederohmige Teilwicklung AC der Primärwicklung 6a, die Sekundärwicklung 8b und die Graetzschaltung 21. Die Reihen- schaltung bestehend aus der Teilwicklung CB der Primärwicklung 6a und der Leitungsnachbildung 9 ist hochohmig und der in ihr fliessende Gleichstrom kann vernachlässigt werden.

Die Bedeutung der Graetzschaltung 21 liegt darin, dass ihre Ausgangsspannung immer die gleiche Polarität besitzt, unabhängig von der Stromflussrichtung des Speisegleichstromes in der Fernsprechleitung 19; 20.

Die Arbeitsweise des Nummernschalters und dessen Aufzugsschliesskontaktes 5 sowie dessen Impulsöffnungskontaktes 4 ist aus der Fernsprechtechnik her hinlänglich bekannt und wird daher, da auch nicht Gegenstand eines Patentanspruchs, nicht näher be- schrieben.

./.

PA 2220

0108228

Zahlenbeispiel:

Die Teilwicklung AC der Primärwicklung 6a bzw. 8a besitzt einen Gleichstromwiderstand $R_{AC,\,6a}$ bzw. $R_{AC,\,8a}$ von je 50 $\Omega$ und derjenige von deren Teilwicklung CB beträgt je 147 $\Omega$. Der Gleichstromwiderstand $R_{6b}$ bzw. $R_{8b}$ der Sekundärwicklung 6b bzw. 8b beträgt je 28 $\Omega$. Beim Fliessen eines Speisegleichstroms von I = 22 mA entsteht am Eingang der Fernsprechstelle zwischen den beiden Drähten 19 und 20 ein Gleichspannungsabfall $U_{19,\,20}$ von nur:

$$U_{19,\,20} = I\,R_{AC,\,6a} + I\,R_{8b} + V_{GR} + V_{DC/DC}$$

$$= 22 \cdot 10^{-3} \cdot 50 + 22 \cdot 10^{-3} \cdot 28 + 0{,}8\ V + V_{DC/DC}$$

$$= 78 \cdot 22 \cdot 10^{-3} + 0{,}8\ V + V_{DC/DC}$$

$$= 1{,}72\ V + 0{,}8\ V + V_{DC/DC}$$

$$= 2{,}52\ V + V_{DC/DC}$$

$$= 2{,}52\ V + 6{,}5\ V \approx 9\ V,$$

wobei $V_{DC/DC}$, z.B. 6,5 V, die benötigte Gleichspannung am Eingang des Gleichspannungs/Gleichspannungs-Wandlers 24 und $V_{GR}$ den Spannungsabfall über die Graetzschaltung 21 darstellt.

In der nicht abgeänderten ursprünglichen Schaltung gilt dagegen der zu hohe Wert:

$$U_{19,\,20} = I \cdot R_{AC,\,6a} + I\,R_{Mikrofon} + V_{GR} + V_{DC/DC}$$

$$= 22 \cdot 10^{-3} \cdot 50 + 22 \cdot 10^{-3} \cdot 230 + 0{,}8\ V + 6{,}5\ V$$

$$= 22 \cdot 10^{-3} \cdot 280 + 7{,}3\ V$$

$$= 6{,}16\ V + 7{,}3\ V = 13{,}46\ V,$$

./.

PA 2220

wobei $R_{\text{Mikrofon}}$ = 230 Ω der Innenwiderstand eines Kohlemikrofons ist.

Dank des Ersatzes des Kohlemikrofons durch die Sekundärwicklung 8b wird somit die Gleichspannung über dem eigentlichen Hör/Sprech-Kreis 6; 7; 8; 9 und damit auch dessen Speiseleistungsverbrauch stark reduziert, was wiederum denjenigen der gesamten Sprechstelle verkleinert.

Die Wechselstrom-Ausgangsimpedanz am Ausgang der Sekundärwicklung 8b beträgt unter Vernachlässigung des Impedanzwerts des Ausgangskondensators 30 und des sehr niedrigen Ausgangswiderstandes des Operationsverstärkers 25:

$$R_{31} \left(\frac{N_{8b}}{N_{8a}}\right)^2 = 150 \left(\frac{0,67}{1}\right)^2 = 67 \text{ Ω,}$$

wobei $\dfrac{N_{8b}}{N_{8a}}$ das Wicklungsverhältnis des Transformators 8 und $R_{31}$ der Wert des Ausgangswiderstandes 31 ist.

Die Schaltung des Mikrofonverstärkers 13 gemäss der Fig. 2 ist die bekannte Operationsverstärkerschaltung eines invertierenden Wechselstromverstärkers, dessen Wechselstrom-Verstärkungsfaktor den Wert $R_{28}/R_{27} = \dfrac{230}{0,3} \approx 73 \approx 37$ dB besitzt, wobei $R_{28}$ den Wert, z.B. 220 kΩ, des Rückkupplungswiderstandes 28 und $R_{27}$ denjenigen, z.B. 300 Ω, des Vorwiderstandes 27 darstellt, und dessen Gleichstrom-Verstärkungsfaktor gleich eins ist. Die beiden Spannungsteilerwiderstände 29 und 32, z.B. beide gleich 100 kΩ, bilden einen Spannungsteiler zum Einstellen des Arbeitspunktes des Operationsverstärkers 25, während der Spannungsteilerkondensator 33, z.B. gleich 0,1 μF, den zweiten Spannungsteilerwiderstand 32 wechselstrommässig kurzschliesst.

./.

PATENTANSPRUECHE

1. Fernsprechstelle mit niedrigem Speiseleistungsverbrauch, eine Reihenschaltung enthaltend, bestehend aus einem Eingangskreis eines Speisegerätes und einer Parallelschaltung eines Nummernschalter-Aufzugsschliesskontaktes mit einer Reihenschaltung, die ihrerseits aus einer Leitungsnachbildung und der Primärwicklung eines ersten Sprechtransformators besteht, dessen niederohmige Sekundärwicklung mit einem ersten Fernhörer verbunden ist, dadurch gekennzeichnet, dass zusätzlich die niederohmige Sekundärwicklung (8b) eines zweiten Sprechtransformators (8) dermassen an einer Zwischenanzapfung (C) der Primärwicklung (6a) des ersten Sprechtransformators (6) angeschlossen ist, dass sie die hochohmige Teilwicklung (CB) dieser Primärwicklung (6a) und die Leitungsnachbildung (9) überbrückt, und dass die Primärwicklung (8a) des zweiten Sprechtransformators (8) von einem Mikrofonschaltkreis (12) gespeist ist.

2. Fernsprechstelle nach Anspruch 1, dadurch gekennzeichnet, dass die beiden Sprechtransformatoren (6, 8) gleich sind und dass nur die niederohmige Teilwicklung (AC) der Primärwicklung (8a) des zweiten Sprechtransformators (8) vom Mikrofonschaltkreis (12) gespeist ist.

3. Fernsprechstelle nach Anspruch 1 oder 2, dadurch gekennzeichnet, dass der Mikrofonschaltkreis (12) einen zweiten Fernhörer (14) enthält, der als Mikrofon arbeitet und der in der angegebenen Reihenfolge über einen Trenntransformator (18), dessen Ausgang mit einer Parallelschaltung belastet ist, die aus einem Lastwiderstand (15) und zwei in umgekehrter Richtung gepolten parallelen Dioden (16, 17) besteht, und einen Mikrofonverstärker (13) mit dem Ausgang des Mikrofonschaltkreises (12) verbunden ist.

4. Fernsprechstelle nach Anspruch 3, dadurch gekennzeichnet, dass der Mikrofonverstärker (13) mittels eines Operationsverstärkers (25) als invertierender Wechselstromverstärker aufgebaut ist,

ʒitspunkt an seinem nichtinvertierenden Eingang mittels

ιungsteilers (29; 32) eingestellt ist und dessen invertie-

ɟang über einen ersten RC-Schaltkreis (34) angesteuert

sen Ausgang über einen zweiten RC-Schaltkreis (35)

ʒgang des Mikrofonverstärkers (13) verbunden ist,

.ıι ʌückkopplungswiderstand (28) zwischen dem invertieren-

ᵥᵉn Eingang des Operationsverstärkers (25) und dessen Ausgang

liegt.

0108228

## Fig. 1

## Fig. 2